(19) Europäisches Patentamt
European Patent Office
Office européen des brevets

(11) EP 4 644 238 A1

(12) EUROPEAN PATENT APPLICATION
published in accordance with Art. 153(4) EPC

(43) Date of publication:
05.11.2025 Bulletin 2025/45

(51) International Patent Classification (IPC):
B64C 27/473 (2006.01)    B64C 27/467 (2006.01)

(21) Application number: 23909111.9

(22) Date of filing: 11.07.2023

(52) Cooperative Patent Classification (CPC):
B64C 27/46; B64C 27/467; B64C 27/473

(86) International application number:
PCT/CN2023/106818

(87) International publication number:
WO 2024/139168 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.12.2022 CN 202211679092

(71) Applicant: Beijing Sankuai Online Technology
Co., Ltd
Beijing 100080 (CN)

(72) Inventors:
• ZHAO, Longzhi
Beijing 100080 (CN)
• XU, Lijun
Beijing 100080 (CN)
• ZHANG, Yifei
Beijing 100080 (CN)
• ZHAO, Tianming
Beijing 100080 (CN)

(74) Representative: Studio Torta S.p.A.
Via Viotti, 9
10121 Torino (IT)

(54) ROTOR AND ROTORCRAFT

(57) The present application discloses a rotor. The rotor comprises a blade, a plurality of protruding structures protrude from the surface of the blade, the plurality of protruding structures are sequentially arranged at intervals in the spanwise direction of the blade, and a height difference is formed between every two adjacent protruding structures.

FIG. 2

EP 4 644 238 A1

## Description

The disclosure claims the priority to Chinese Patent Application No. 202211679092.1, filed on December 26, 2022 and entitled "rotary wing and rotary wing aircraft", which is incorporated in its entirety herein by reference.

## TECHNICAL FIELD

The disclosure relates to the technical field of aircrafts, and in particular to a rotary wing and a rotary wing aircraft.

## BACKGROUND

A rotary wing aircraft is capable of vertical take-off and landing and low-altitude flight. With particular flight advantages, it has been widely applied to military and civilian fields, and will function as a dominant vehicle of urban air traffic in future.

## SUMMARY

An objective of the invention is to provide a rotary wing and a rotary wing aircraft, so as to solve the technical problem in the related art and improve a noise reduction effect of the rotary wing.

In a first aspect, the disclosure provides a rotary wing. The rotary wing includes a blade, where a plurality of protruding structures are arranged on a surface of the blade in a protruding manner, the plurality of protruding structures are sequentially arranged at intervals in a spanwise direction of the blade, and a height difference is provided between adjacent protruding structures.

As described in the above rotary wing, a height of the plurality of protruding structures is sequentially reduced in the spanwise direction of the blade to form a stepped distribution.

As described in the above rotary wing, a height difference between a protruding structure closest to a rotation center of the blade and a protruding structure farthest from the rotation center is 0.1 mm.

As described in the above rotary wing, the protruding structures are polygonal bosses.

As described in the above rotary wing, each polygonal boss includes a front portion, where the front portion has a triangular cross section.

As described in the above rotary wing, an inner angle closest to a leading edge of the blade in a triangle is greater than or equal to 30° and less than or equal to 90°.

As described in the above rotary wing, a height of the protruding structures satisfies:

$$t = \frac{kc}{Re^{0.2}},$$

where

t is the height of the protruding structures; and
k is a proportionality coefficient, and k ranges from 0.01 to 0.2;
c is a local chord length; and
Re is a local Reynolds number.

As described in the above rotary wing, where the local Reynolds number satisfies the following requirement:

$$Re = \frac{\rho \omega rc}{\mu},$$

where

$\rho$ is an air density;

$\omega$ is a rotational angular velocity of the blade; and

r is a local spanwise position; and

$\mu$ is aerodynamic viscosity.

As described in the above rotary wing, the local Reynolds number is greater than or equal to 10000, and less than or equal to 500000.

As described in the above rotary wing, the protruding structures have a chordwise length greater than or equal to 0.05c and less than or equal to 0.2c, where c is a local chord length.

As described in the above rotary wing, a ratio of a spanwise width of the protruding structures to a chordwise length of the protruding structures is greater than 0.01 and less than 0.2.

As described in the above rotary wing, a ratio of spacing between adjacent protruding structures to a spanwise width of the protruding structures is greater than 0.1 and less than 2.

As described in the above rotary wing, spacing between the protruding structures and a leading edge of the blade is greater than or equal to 0.05c and less than or equal to 0.5c, where c is a local chord length.

In a second aspect, the disclosure further provides a rotary wing aircraft. The rotary wing aircraft includes the above rotary wing.

Compared with the related art, in the disclosure, the plurality of protruding structures are sequentially arranged at intervals in the spanwise direction of the blade, and a contact region with air is increased by means of the plurality of protruding structures having the height difference to achieve forced turbulence transition on a laminar separation bubble of the blade, such that an air flow is more closely attached to the surface of the blade, and a thickness of a boundary layer of a trailing edge is reduced. Thus, an occurrence region of noise is reduced, and the purpose of reducing the noise is achieved.

**BRIEF DESCRIPTION OF THE DRAWINGS**

FIG. 1 is a perspective view of an overall structure of a rotary wing according to an embodiment of the disclosure;

FIG. 2 is a front view of an overall structure of a rotary wing according to an embodiment of the disclosure;

FIG. 3 is a schematic structural diagram of a local position of a rotary wing according to an embodiment of the disclosure; and

FIG. 4 is a perspective view of a protruding structure of a rotary wing according to an embodiment of the disclosure.

Description of reference numerals: 1-blade, 2-protruding structure, 3-main blade, 4-blade tip, 5-leading edge, 6-trailing edge, 7-front portion, and 8-recess.

**DETAILED DESCRIPTION OF THE EMBODIMENTS**

The embodiments described below with reference to the accompanying drawings are exemplary and are merely used to explain the disclosure, but cannot be interpreted as limiting the disclosure.

In the related art, a rotary wing aircraft is capable of vertical take-off and landing and low-altitude flight. With particular flight advantages, it has been widely applied to military and civilian fields, and will function as a dominant vehicle of urban air traffic in future. However, noise of the aircraft limits application scenarios of the rotary wing aircraft to a large extent, and the importance of reduction in aerodynamic noise of a propeller gradually emerges.

The disclosure provides a rotary wing and a rotary wing aircraft, so as to solve the technical problem in the related art and improve a noise reduction effect of the rotary wing. The rotary wing will be introduced below:

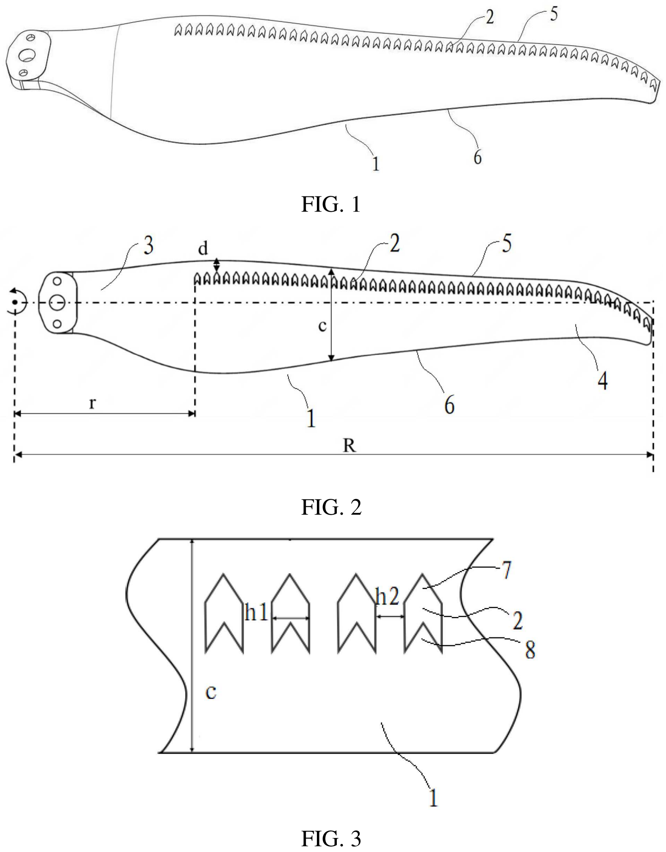

It should be noted herein that parameters involved in the disclosure are all defined in a common manner in the art. A blade in FIG. 2 is taken as an example. A wing section is defined as a two-dimensional section of the blade 1 at any position in a spanwise direction, a rotation center is set as an origin to establish a coordinate system, the rotation center is a center point for rotation of the blade 1, the blade 1 rotates about the rotation center, one end of the wing section close to the rotation center is a main blade 3, one end of the wing section away from the rotation center is a blade tip 4, and an extension direction from the main blade 3 to the blade tip 4 is defined as the spanwise direction (a left-to-right direction in FIG. 2). Correspondingly, a direction perpendicular to the spanwise direction is a chordwise direction. The chordwise direction of the blade 1 includes a leading edge 5 and a trailing edge 6. An extension direction from the trailing edge 6 to the leading edge 5 is a rotation direction of the blade.

With reference to FIG. 1 to FIG. 4, a rotary wing according to the disclosure includes a blade 1. A plurality of protruding structures 2 are arranged on a surface of the blade 1 in a protruding manner, the plurality of protruding structures 2 are sequentially arranged at intervals in a spanwise direction of the blade 1, and a height difference is provided between adjacent protruding structures 2. A contact region with air is increased by means of the plurality of protruding structures 2 having the height difference to achieve forced turbulence transition on a laminar separation bubble of the blade 1, such that an air flow is more closely attached to the surface of the blade 1, and a thickness of a boundary layer of a trailing edge is reduced. Thus, an occurrence region of noise is reduced, and the purpose of reducing the noise is reduced. According to an actual noise test, the rotary wing having the protruding structures 2 can reduce noise of up to 5 dBA under the same tension.

In the embodiment according to the disclosure, a height of the plurality of protruding structures 2 is sequentially reduced in the spanwise direction of the blade 1 to form a stepped distribution, thereby forcibly transiting the laminar separation bubble, effectively reducing a total sound pressure level, and further reducing nose of the whole blade 1. Preferably, the plurality of protruding structures 2 are distributed at equal intervals, a gap of the same size is provided between adjacent protruding structures 2, and a height difference between a height of a protruding structure 2 closest to the rotation center of the blade 1 and a height of a protruding structure 2 farthest from the rotation center of the blade 1 is 0.1 mm. In a feasible implementation, a height of a protruding structure closest to a rotation center of a blade is 0.2 mm, a height of a protruding structure 2 farthest from the rotation center of the blade 1 is 0.1 mm, and 40 to 50 protruding structures 2 are arranged between the two protruding structures. The height of the plurality of protruding structures 2 is linearly and progressively reduced. The protruding structure 2 farthest from the rotation center of the blade 1 is located at a tail end of a blade tip 4, and a local spanwise position r of the protruding structure 2 closest to the rotation center of the blade 1 is 1/4 to 1/3 of a length R from the blade tip 4 to the rotation center of the blade 1.

Those skilled in the art may know that the plurality of protruding structures 2 may form distributions of other shapes. For example, the plurality of protruding structures 2 may be arranged in the spanwise direction of the blade 1 to form a zigzag distribution, and the plurality of protruding structures 2 are periodically changed in height in the spanwise direction of the blade 1.

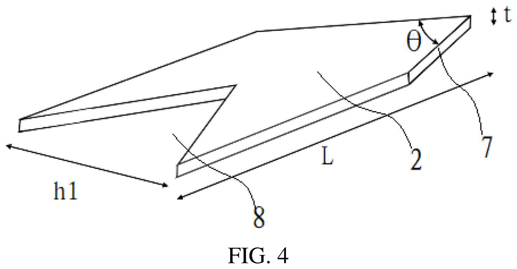

In order to further reduce the noise, with reference to FIG. 3 and FIG. 4, the protruding structures 2 are polygonal bosses, and one ends of the polygonal bosses facing a leading edge 5 of the blade 1 form triangular front portions 7. Each front portion 7 includes two obliquely arranged outer wall surfaces. One ends of the two outer wall surfaces intersect with each other, and the other ends of the two outer wall surfaces are continuous with two side surfaces of the protruding structure 2 respectively. Openings of the front portions 7 are provided facing the trailing edge 6 of the blade 1, extension directions of center lines of the front portions 7 are parallel to a rotation direction of the blade 1, and the front portions 7 of the plurality of protruding structures 2 are arranged parallel to one another. Preferably, an inner angle closest to the leading edge 5 of the blade in a triangle is greater than or equal to 30° and less than or equal to 90°. Such an optimal design of front ends of the protruding structures 2 can weaken eddy current at the front ends of the protruding structures 2 and reduce interference of the eddy current, thereby achieving the purpose of reducing the noise.

In the embodiment according to the disclosure, one ends of the protruding structures 2 facing the trailing edge 6 of the blade 1 are provided with recesses 8. The recesses 8 are recesses that are recessed to be formed at rears of the protruding structures 2. Each recess has a shape of an arrow, and includes two obliquely arranged inner wall surfaces. One ends of the two inner wall surfaces intersect with each other, and the other ends of the two inner wall surfaces are continuous with the two side surfaces of the protruding structure 2 respectively. Openings of the recesses 8 are provided facing the trailing edge 6 of the blade 1, extension directions of center lines of the recesses 8 are parallel to the rotation directions of the blade 1, and the recesses 8 of the plurality of protruding structures 2 are arranged parallel to one another. Preferably, an included angle between the recesses 8 is located between 30° and 90°. Such an optimal design for rear ends of the protruding structures 2 can weaken the eddy current at the rear ends of the protruding structures 2, and reduce the interference of the eddy current, thereby achieving the purpose of reducing the noise.

In the embodiment according to the disclosure, the protruding structures 2 have a set height t, and the height satisfies:

$$t = \frac{kc}{Re^{0.2}}.$$

Specifically, t is the height of the protruding structures 2, k is a proportionality coefficient, c is a local chord length, i.e. a distance from the leading edge 5 to the trailing edge 6 of a wing section of a cross section of a station, and Re is a local Reynolds number.

A size and arrangement form of the protruding structures 2 are controlled, such that a total sound pressure level may be effectively reduced. It may be known from a first formula that the height t of the protruding structures 2 is changed, and is mainly changed according to a value of the local Reynolds number Re. Specifically, in the spanwise direction of the blade 1, the farther the local Reynolds number is from the rotation center, the larger the local Reynolds number Re is, and the smaller the height t of the protruding structures 2 is. The height of the protruding structures 2 is reduced in a gradient manner in the spanwise direction, such that the air flow is more closely attached to the surface of the blade 1. Thus, the laminar separation bubble is forcibly transited, and noise of the whole blade 1 is optimally reduced.

In the embodiment according to the disclosure, k ranges from 0.01 to 0.2, and includes endpoint values. A proper mapping relationship is maintained between the local chord length c, the local Reynolds number Re, and the height t of the protruding structures 2 based on a value of the proportionality coefficient k. After the local chord length c and the local Reynolds number Re are changed, the height of the protruding structures 2 is appropriately changed accordingly. A change of the height t of the protruding structures 2 can balance both aircraft aerodynamic performance and noise suppression, and reduce the noise of the rotary wing to some extent without affecting aerodynamic efficiency of the blade 1.

Further, a value of Re satisfies:

$$Re = \frac{\rho \omega rc}{\mu}.$$

$\rho$ is an air density, $\omega$ is a rotational angular velocity of the blade 1, r is a local spanwise position, c is a local chord length, and $\mu$ is aerodynamic viscosity.

The local Reynolds number Re is changed along with changes of values of the air density $\rho$, the rotational angular velocity $\omega$ of the blade 1, the local spanwise position r, the local chord length c and the aerodynamic viscosity $\mu$. After a rotation speed of the blade 1 is specified, the local Reynolds number Re is mainly related to the local spanwise position r and the local chord length c. The larger the local Reynolds number Re is, the smaller the height t of the protruding structures 2 is, the smaller the local Reynolds number Re is, and the larger the height t of the protruding structures 2 is. Protruding structures 2 having a larger height approaches the rotation center. Thus, the aerodynamic efficiency of a rotary wing aircraft is improved. The aerodynamic efficiency of the rotary wing aircraft is improved, and the lower rotation speed is required in a case of the same lifting surface distribution, such that it is possible to reduce the noise generated in a flight process of the rotary wing aircraft. Preferably, the local Reynolds number is greater than or equal to 10000 and less than or equal to 500000 to produce a desired noise reduction effect.

In the embodiment according to the disclosure, the protruding structures 2 have a set chordwise length L, and the chordwise length L is greater than or equal to 0.05c and less than or equal to 0.2c. L is the chordwise length of the protruding structures 2, and c is a local chord length. The chordwise length L of the protruding structures 2 maintains a proportional relationship with the local chord length c. The longer the local chord length c is, the longer the chordwise length L of the protruding structures 2 is, and the larger an action region of the protruding structures 2 is. Thus, the occurrence region of the noise is reduced.

In the embodiment according to the disclosure, the protruding structures 2 have a set spanwise width h1, and a ratio of the spanwise width h1 to the chordwise length L of the protruding structures is greater than 0.01 and less than 0.2. Specifically, h1 is a spanwise width of the protruding structures 2, and L is the chordwise length of the protruding structures 2. The protruding structures 2 have elongated structures, such that the air flow may smoothly flow to the trailing edge to obtain better aerodynamic performance and a better noise reduction effect.

In the embodiment according to the disclosure, a ratio of spacing h2 between the plurality of protruding structures 2 to a spanwise width h1 of the protruding structures 2 is greater than 0.1 and less than 2. Specifically, h1 is the spanwise width of the protruding structures 2, and h2 is the spacing between two adjacent protruding structures 2. In order to further reduce noise generated by rotation of the blade 1, with reference to FIG. 1 and FIG. 2, the plurality of protruding structures 2 are arranged close to the leading edge 5 of the blade 1. Specifically, the spacing between the protruding structures 2 and the leading edge 5 of the blade 1 is greater than or equal to 0.05c, and less than or equal to 0.5c.

Specifically, d is the spacing between the protruding structures 2 and the leading edge 5 of the blade 1, and c is the local chord length. According to a flow characteristic of a low Reynolds number laminar flow wing section, the laminar separation bubble is located near the leading edge 5 of the blade 1. The protruding structures 2 are arranged close to the leading edge 5 of the blade 1, such that the laminar separation bubble of the leading edge 5 is forcibly transited to interrupt spanwise flow of air on the leading edge 5 of the blade 1 when the blade 1 rotates, thereby reducing eddy current formed by the leading edge 5 of the blade 1, and further reducing noise generated when the blade 1 rotates.

With reference to FIG. 1 to FIG. 4, the protruding structures 2 have a cross section of an arrow-shaped structure. Those skilled in the art may know that the protruding structures 2 may further include a regular cross section of a circular cross section, a regular cross section or a polygonal cross section, or an irregular cross section, which is not limited herein.

Based on the above embodiment, the disclosure further provides a rotary wing aircraft. The rotary wing aircraft includes the above rotary wing, and has all the beneficial effects of the rotary wing, which will not be repeated herein.

The construction, features, and effects of the disclosure are described in detail according to the embodiments shown in the drawings above, what are described above are only one or more embodiments of the disclosure, but the disclosure does not limit the scope of implementation as shown in the drawings, and any changes made according to the concept of the disclosure, or equivalent embodiments modified to equivalent changes should all fall within the scope of protection of the disclosure when still not falling beyond the scope covered by the description and drawings.

**Claims**

1. A rotary wing, comprising a blade (1), wherein a plurality of protruding structures (2) are arranged on a surface of the blade (1), the plurality of protruding structures (2) are sequentially arranged at intervals in a spanwise direction of the blade (1), and a height difference is provided between adjacent protruding structures (2).

2. The rotary wing according to claim 1, wherein a height of the plurality of protruding structures (2) is sequentially reduced in the spanwise direction of the blade (1) to form a stepped distribution.

3. The rotary wing according to claim 2, wherein a height difference between a protruding structure (2) closest to a rotation center of the blade (1) and a protruding structure (2) farthest from the rotation center is 0.1 mm.

4. The rotary wing according to claim 1, wherein the protruding structures (2) are polygonal bosses.

5. The rotary wing according to claim 4, wherein each polygonal boss comprises a front portion (7), wherein the front portion (7) has a triangular cross section.

6. The rotary wing according to claim 5, wherein an inner angle closest to a leading edge (5) of the blade (1) in a triangle is greater than or equal to 30° and less than or equal to 90°.

7. The rotary wing according to claim 1, wherein a height of the protruding structures (2) satisfies:

$$ t = \frac{kc}{Re^{0.2}}, $$

wherein

t is the height of the protruding structures (2); and

k is a proportionality coefficient, and k ranges from 0.01 to 0.2;
c is a local chord length; and
Re is a local Reynolds number.

8. The rotary wing according to claim 7, wherein the local Reynolds number satisfies the following requirement:

$$\mathrm{Re} = \frac{\rho \omega r c}{\mu},$$

wherein

$\rho$ is an air density;
$\omega$ is a rotational angular velocity of the blade (1);
r is a local spanwise position; and
$\mu$ is aerodynamic viscosity.

9. The rotary wing according to claim 8, wherein the local Reynolds number is greater than or equal to 10000, and less than or equal to 500000.

10. The rotary wing according to claim 1, wherein the protruding structures (2) have a chordwise length greater than or equal to 0.05c and less than or equal to 0.2c, wherein c is a local chord length.

11. The rotary wing according to claim 1, wherein a ratio of a spanwise width of the protruding structures (2) to a chordwise length of the protruding structures (2) is greater than 0.01 and less than 0.2.

12. The rotary wing according to claim 1, wherein a ratio of spacing between adjacent protruding structures (2) to a spanwise width of the protruding structures (2) is greater than 0.1 and less than 2.

13. The rotary wing according to claim 1, wherein spacing between the protruding structures (2) and a leading edge (5) of the blade (1) is greater than or equal to 0.05c and less than or equal to 0.5c, wherein c is a local chord length.

14. A rotary wing aircraft, comprising the rotary wing according to any one of claims 1 to 13.

FIG. 1

FIG. 2

FIG. 3

FIG. 4

## INTERNATIONAL SEARCH REPORT

| International application No. |
| --- |
| **PCT/CN2023/106818** |

**A.    CLASSIFICATION OF SUBJECT MATTER**

B64C27/473(2006.01)i;  B64C27/467(2006.01)i

According to International Patent Classification (IPC) or to both national classification and IPC

**B.    FIELDS SEARCHED**

Minimum documentation searched (classification system followed by classification symbols)

IPC:B64C

Documentation searched other than minimum documentation to the extent that such documents are included in the fields searched

Electronic data base consulted during the international search (name of data base and, where practicable, search terms used)

CNTXT, ENTXTC, VEN, CJFD: 螺旋桨, 凸, 旋翼, 噪, 噪声, 噪音, 北京三快, wing, rotor, convex, noise, voice

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 219172657 U (BEIJING SANKUAI ONLINE TECHNOLOGY CO., LTD.) 13 June 2023 (2023-06-13)<br>claims 1-14 | 1-14 |
| X | CN 217227901 U (BEIJING SANKUAI ONLINE TECHNOLOGY CO., LTD.) 19 August 2022 (2022-08-19)<br>description, paragraphs 0038-0059, and figures 1-6 | 1-14 |
| A | CN 106114850 A (DAISHO PARADISE HI-TECH DEVELOPMENT CO., LTD.) 16 November 2016 (2016-11-16)<br>entire document | 1-14 |
| A | CN 113086169 A (JILIN UNIVERSITY) 09 July 2021 (2021-07-09)<br>entire document | 1-14 |
| A | CN 209080146 U (LIAONING DRALONG UAV TECHNOLOGY CO., LTD.) 09 July 2019 (2019-07-09)<br>entire document | 1-14 |

☑ Further documents are listed in the continuation of Box C.          ☑ See patent family annex.

| | |
| --- | --- |
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **13 September 2023** | **21 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/106818** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 217477543 U (BEIJING SANKUAI ONLINE TECHNOLOGY CO., LTD.) 23 September 2022 (2022-09-23)<br>entire document | 1-14 |
| A | US 2009123289 A1 (MIDWEST RESEARCH INSTITUTE) 14 May 2009 (2009-05-14)<br>entire document | 1-14 |

Form PCT/ISA/210 (second sheet) (July 2022)

**INTERNATIONAL SEARCH REPORT**
Information on patent family members

International application No.

**PCT/CN2023/106818**

| Patent document cited in search report | | | Publication date (day/month/year) | Patent family member(s) | | | Publication date (day/month/year) |
|---|---|---|---|---|---|---|---|
| CN | 219172657 | U | 13 June 2023 | None | | | |
| CN | 217227901 | U | 19 August 2022 | None | | | |
| CN | 106114850 | A | 16 November 2016 | None | | | |
| CN | 113086169 | A | 09 July 2021 | None | | | |
| CN | 209080146 | U | 09 July 2019 | None | | | |
| CN | 217477543 | U | 23 September 2022 | None | | | |
| US | 2009123289 | A1 | 14 May 2009 | WO | 2009062159 | A1 | 14 May 2009 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211679092